(19) Europäisches Patentamt

European Patent Office

Office européen des brevets

(11) Veröffentlichungsnummer : **0 387 495 B1**

(12) # EUROPÄISCHE PATENTSCHRIFT

(45) Veröffentlichungstag der Patentschrift :
**25.03.92 Patentblatt 92/13**

(51) Int. Cl.$^5$ : **B60C 23/00**

(21) Anmeldenummer : **90100965.4**

(22) Anmeldetag : **18.01.90**

(54) **Einrichtung zur Änderung des Druckes im Reifen eines Fahrzeuges.**

(30) Priorität : **17.03.89 DE 3908807**

(43) Veröffentlichungstag der Anmeldung :
**19.09.90 Patentblatt 90/38**

(45) Bekanntmachung des Hinweises auf die
Patenterteilung :
**25.03.92 Patentblatt 92/13**

(84) Benannte Vertragsstaaten :
**DE FR GB IT NL SE**

(56) Entgegenhaltungen :
**WO-A-87/01991**
**DE-A- 3 317 810**
**DE-A- 3 636 240**
**US-A- 2 715 430**

(73) Patentinhaber : **WABCO Westinghouse
Fahrzeugbremsen GmbH
Am Lindener Hafen 21 Postfach 91 12 80
W-3000 Hannover 91 (DE)**

(72) Erfinder : **Geiger, Hartmut
Kochslandweg 21
W-3008 Garbsen 1 (DE)**

(74) Vertreter : **Schrödter, Manfred
WABCO Westinghouse Fahrzeugbremsen
GmbH Am Lindener Hafen 21 Postfach 91 12
80
W-3000 Hannover 91 (DE)**

EP 0 387 495 B1

Jouve, 18, rue Saint-Denis, 75001 PARIS

## Beschreibung

Die Erfindung betrifft eine Einrichtung zur Änderung des Druckes im Reifen eines Fahrzeuges gemäß dem Oberbegriff des Patentanspruchs 1.

Eine solche Einrichtung wird verwendet, um den Reifendruck eines Fahrzeuges wechselnden Bodenverhältnissen so anzupassen, daß z.B. bei weichem Untergrund mit einem niedrigen Reifendruck eine vergrößerte Auflagefläche des Reifens erreicht wird, während auf einer befestigten Straße bei einem höher eingestellten Reifendruck eine unerwünscht hohe Walkarbeit des Reifens und somit sein vorzeitiger Verschleiß vermieden wird.

Eine Einrichtung der eingangs genannten Art ist durch die DE-A 33 32 677 bekannt.

Die bekannte Einrichtung weist ein Reifendrucksteuerventil auf, durch das das Druckluftsystem des Fahrzeuges mit dem Reifen zum Auffüllen des Reifens verbindbar ist. Das Entleeren des Reifens erfolgt ebenfalls über das Reifendrucksteuerventil, wobei die Luft aus dem Reifen in der dem Füllvorgang entgegengesetzten Richtung durch das Reifendrucksteuerventil führbar ist. Zur beschleunigten Abfuhr von Luft aus dem Reifen, bzw. zur Verkürzung der Entleerungszeit, ist zwischen dem Reifendrucksteuerventil und dem Druckluftsystem des Fahrzeuges ein Entlüftungsventil mit einem Auslaß zur Atmosphäre angeordnet. Bei Beaufschlagung des Entlüftungsventils mit einem dem Reifendruck entsprechenden Druck öffnet das Entlüftungsventil zur Atmosphäre hin, so daß über das Entlüftungsventil Luft aus dem Reifen in die Atmosphäre abströmen kann.

Der funktionellen Beschaffenheit des Reifendrucksteuerventils entsprechend wird jeder Reifendruckänderungsvorgang dadurch beendet, daß dem Reifendrucksteuerventil zur Seite des Druckluftsystems des Fahrzeuges hin, z.B. über ein Relaisventil, schlagartig Luft entzogen wird. Hierdurch schließt das Reifendrucksteuerventil, wodurch die Verbindung vom Reifen zur Seite des Druckluftsystems des Fahrzeuges hin durch das Reifendrucksteuerventil gesperrt ist.

Der beschriebene Schließvorgang des Reifendrucksteuerventils erfolgt mit hinreichender Sicherheit jedoch nur dann, wenn die im Reifen befindliche und unter Reifendruck stehende Luft bei der schlagartigen Entlüftung des Reifendrucksteuerventils daran gehindert wird, allzu schnell in das entlüftete Reifendrucksteuerventil nachzuströmen, derart, daß das Reifendrucksteuerventil nicht in die erwünschte Schließstellung gelangt.

Der beschriebene Schließvorgang wird bei der eingangs erwähnten Einrichtung durch eine für solche Einrichtungen übliche relative Drosselung des Luftstromes vom Reifen zum Reifendrucksteuerventil erreicht. Hierbei kommt es im wesentlichen nur auf das Verhältnis des effektiven Durchlaßquerschnittes vor und hinter dem Reifendrucksteuerventil an. Dies bedeutet, daß bei der bekannten Einrichtung wegen des beschriebenen Entlüftungsventils der gleichwohl immer noch erforderliche Drosselquerschnitt zwischen Reifen und Reifendrucksteuerventil etwas größer gemacht werden kann. Mit dieser, für die vorerwähnte Einrichtung immer noch notwendigen Drosselung muß jedoch nach wie vor der grundsätzliche Nachteil in Kauf genommen werden, daß sich relativ lange Zeiten für das Entleeren des Reifens ergeben.

Der Erfindung liegt die Aufgabe zugrunde, eine Einrichtung der eingangs genannten Art so zu verbessern, daß die sichere Betriebsweise der Einrichtung unabhängig von dem vorerwähnten Verhältnis der effektiven Durchlaßquerschnitte gewährleistet ist.

Diese Aufgabe wird durch die im Patentanspruch 1 angegebene Erfindung gelöst. Weiterbildungen und vorteilhafte Ausführungsbeispiele sind in den Unteransprüchen angegeben.

Die Erfindung hat den Vorteil, daß die vom Reifen über das Entlüftungsventil führende Leitung mit beliebig großem Querschnitt ausgebildet sein kann, ohne daß das vorstehend beschriebene Schließen des Reifendrucksteuerventils nach einem Reifendruckänderungsvorgang beeinträchtigt wird. Hierdurch kann das Entleeren des Reifens mit einer höheren Abströmgeschwindigkeit erfolgen, als dies bei der eingangs erwähnten Einrichtung möglich wäre.

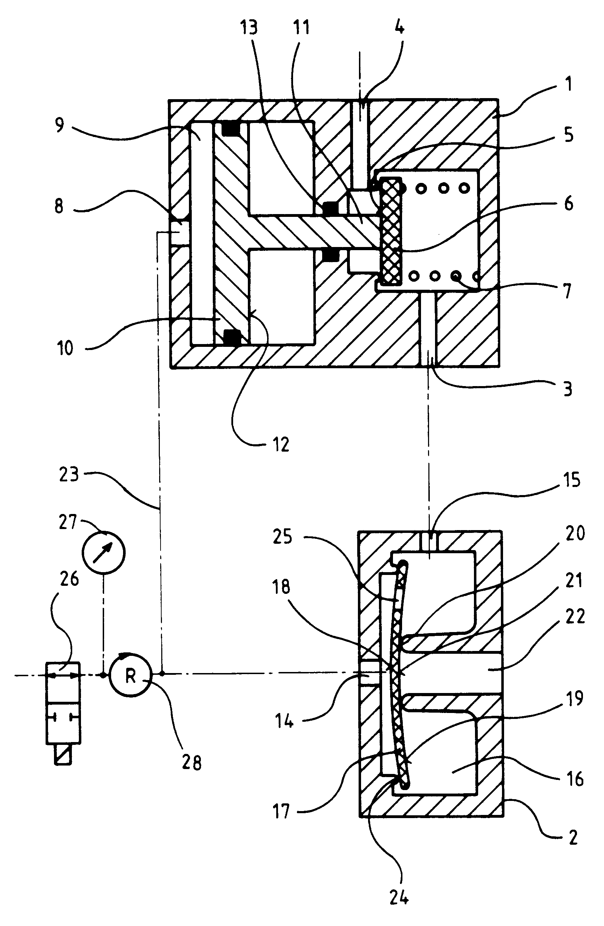

Die Erfindung wird anhand eines Ausführungsbeispiels, das in der Zeichnung dargestellt ist, näher erläutert.

Die Zeichnung zeigt eine vom Druck des Druckluftsystems des Fahrzeuges einerseits und vom Reifendruck andererseits steuerbare Ventilkombinationen (1, 2), bestehend aus einem Reifendrucksteuerventil (1) und einem Entlüftungsventil (2).

Diese Einrichtung ist dafür vorgesehen, Luftdruckänderungen im Reifen eines Fahrzeuges, die entweder vom Fahrer oder durch einen automatischen Vorgang eingeleitet werden können, zu steuern.

Die Ventilkombination (1, 2) der Einrichtung zum Ändern des Druckes im Reifen eines Fahrzeuges ist am Fahrzeugrad befestigt und durch Leitungen mit dem Druckluftsystems des Fahrzeuges und mit dem Innern eines zu regelnden Reifens des Fahrzeugrades verbunden.

Die Ventilkombination (1, 2), die sich mit dem Fahrzeugrad dreht, ist mit dem fest am Fahrzeug installierten Druckluftsystem durch eine rotationsbewegliche Dichtung (28), die Rotor genannt wird, verbunden.

Das Reifendrucksteuerventil (1) weist einen ersten Anschluß (3) auf, der mit einem dem Druck des Druck-

2

luftsystems des Fahrzeuges entsprechenden Druck beaufschlagbar ist. Ein zweiter Anschluß (4) des Reifendrucksteuerventils (1) ist mit einem dem Reifendruck entsprechenden Druck beaufschlagbar. Der erste Anschluß (3) und der zweite Anschluß (4) des Reifendrucksteuerventils (1) sind über ein Ventil (5, 6), das aus einem gehäusefesten Ventilsitz (5) und einem Schließkörper (6) gebildet ist, in der Offenstellung des Ventils (5, 6) miteinander verbunden. Der Schließkörper (6) ist in Schließrichtung durch eine Ventilfeder (7) belastet.

Das Reifendrucksteuerventil (1) weist einen als pneumatischer Steuereinlaß dienenden dritten Anschluß (8) auf, der in eine Steuerkammer (9) des Reifendrucksteuerventils (1) mündet und der mit dem dem Druck des Druckluftsystems des Fahrzeuges entsprechenden Druck beaufschlagbar ist. In der Steuerkammer (9) ist ein pneumatischer betätigbares Steuerelement (10) angeordnet, mit dem das den ersten Anschluß (3) mit dem zweiten Anschluß (4) verbindende Ventil (5, 6) in die Offenstellung bewegbar ist.

Das Steuerelement (10) ist als bewegliche Wand der Steuerkammer (9), in der Art eines Hubkolbens (10) oder einer Membran (10) ausgebildet. Das Steuerelement (10) ist bezüglich des Ventils (5, 6) längsbeweglich angeordnet und weist einen als Ventilstößel (11) ausgebildeten Fortsatz (11) auf, mit dem der Schließkörper (6) in die Offenstellung bewegbar ist.

Die dem dritten Anschluß (8) des Reifendrucksteuerventils (1) abgewandte Seite (12) des Steuerelementes (10) ist gegenüber dem ersten Anschluß (3) und dem zweiten Anschluß (4) des Reifendrucksteuerventils (1) durch eine Dichtung (13) abgedichtet.

Das Entlüftungsventil (2) hat einen ersten Anschluß (14), der mit einem dem Druck des Druckluftsystems des Fahrzeuges entsprechenden Druck beaufschlagbar ist.

Das Entlüftungsventil (2) hat einen zweiten Anschluß (15), der mit dem dem Reifendruck entsprechenden Druck beaufschlagbar ist. Der zweite Anschluß (15) des Entlüftungsventils (2) ist mit dem ersten Anschluß (3) des Reifendrucksteuerventils (1) verbunden.

Der zweite Anschluß (15) des Entlüftungsventils (2) ist mit einer Kammer (16) verbunden, deren Abschluß zum ersten Anschluß (14) ein durch einen Schließkörper (17) in Form einer Membran (17) gebildet ist.

Die Membran (17) hat eine vom ersten Anschluß (14) her beaufschlagbare Wirkfläche (18) und eine vom zweiten Anschluß (15) her beaufschlagbare, ringförmige Wirkfläche (19), die einen gehäusefesten Ventilsitz (20) umgibt, sowie eine Wirkfläche (21), die durch den Ventilsitz (20) begrenzt ist.

Die Membran (17) bildet im Bereich ihres Außendurchmessers mit einem gehäusefesten Ventilsitz (24) ein Einlaßventil (17, 24), durch das Luft von dem ersten Anschluß (14) zum zweiten Anschluß (15) des Entlüftungsventils (2) strömen kann.

Der erste Anschluß (14) des Entlüftungsventils (2) ist mit dem dritten Anschluß (8) des Reifendrucksteuerventils (1) durch eine Leitung (23) verbunden.

Die Wirkungsweise der Einrichtung ist wie folgt:

## 1. Reifendruck erhöhen

Vom Druckluftsystem des Fahrzeugs her wird dem ersten Anschluß (14) des Entlüftungsventils (2) und dem dritten Anschluß (8) des Reifendrucksteuerventils (1) Luft mit vorbestimmten Druck zugeführt.

Der Atmosphärenauslaß (22) des Entlüftungsventils (2) wird gegenüber dem ersten Anschluß (14) und dem zweiten Anschluß (15) des Entlüftungsventils (2) abgesperrt. Dies geschieht durch Beaufschlagung der Wirkfläche (18) der Membran (17) mit Druckluft und dem dadurch erfolgenden Schließen des Auslaßventils (17, 20). Durch gleichzeitige Beaufschlagung des über den Ventilsitz (20) hinausragenden Teils der Wirkfläche (18) der Membran (17) hebt die Membran (17) im Bereich ihres Außendurchmessers von dem Ventilsitz (24) ab, derart, daß das Einlaßventil (17, 24) die Offenstellung einnimmt und die Luft über den zweiten Anschluß (15) des Entlüftungsventils (2) zum ersten Anschluß (3) des Reifendrucksteuerventils (1) strömen kann.

Durch gleichzeitige Beaufschlagung des dritten Anschlusses (8) des Reifendrucksteuerventils (1) mit Luft wird das Steuerelement (10) betätigt, derart, daß der Ventilstößel (11) das Ventil (5, 6) in die Offenstellung bewegt.

Die Luft kann nun vom Druckluftsystem des Fahrzeugs her über das Einlaßventil (17, 24) des Entlüftungsventil (2) und das Ventil (5, 6) sowie den Anschluß (4) des Reifendrucksteuerventils (1) zum Reifen gelangen.

## 2. Beenden des Reifendruckänderungsvorganges

Nach beendeten Belüftungsvorgang, d.h. wenn der Reifendruck die gewünschte Höhe erreicht hat, wird vom Fahrer oder durch eine automatische Einrichtung vom Druckluftsystem des Fahrzeugs her dem dritten Anschluß (8) des Reifendrucksteuerventils (1) und dem ersten Anschluß (14) des Entlüftungsventils (2) der Druck schlagartig entzogen. Hierdurch wird auch das Steuerelement (10) drucklos, so daß das Ventil (5, 6) durch die auf den Schließkörper (6) wirkende Kraft der Ventilfeder (7) geschlossen wird. Gleichzeitig schließt

3

EP 0 387 495 B1

das Ventil (17, 24) im Entlüftungsventil (2).

Die Ventilfeder (7) und die Flächen (5) und (10) sind so aufeinander abgestimmt, daß einerseits bei dem zulässigen maximalen Reifendruck das Ventil (5, 6) nicht vom Reifendruck geöffnet werden kann und andererseits das Ventil (5, 6) automatisch schließt, wenn ein vorgegebener minimaler Vorsteuerdruck in der Vorsteuerkammer (9) unterschritten wird.

Durch die Entlüftung des ersten Anschlusses (14) des Entlüftungsventils (2) wird der zwischen dem Reifendrucksteuerventil (1) und dem Entlüftungsventil (2) noch anstehende Druck über das Auslaßventil (17, 20) und den Auslaß (22) in die Atmosphäre abgeführt.

Mit diesem Vorgang, der stets einer schlagartigen Entlüftung am dritten Anschluß (8) des Reifendrucksteuerventils (1) und am ersten Anschluß (14) des Entlüftungsventils (2) folgt, wird sowohl das Erhöhen als auch ein Absenken des Reifendruckes abgeschlossen.

Durch die erfindungsgemäße Ausbildung des Reifendrucksteuerventils (1) als vorsteuerbares 2/2-Wegeventil erfolgt eine Trennung des Steuerdruckes vom Füll- bzw. Entleerungsdruck des Reifens. Hierdurch kann die Verbindung vom Reifeninnern zum zweiten Anschluß (4) des Reifendrucksteuerventils (1) durch eine ungedrosselte Leitung beliebigen Querschnitts ausgebildet sein, wodurch optimale Füll- bzw. Entleerungszeiten für den Reifen erreichbar sind.

### 3. Reifendruck senken

Vom Druckluftsystem des Fahrzeuges her wird über ein Drucksteuerventil dem ersten Anschluß (14) des Entlüftungsventils (2) und dem dritten Anschluß (8) des Reifendrucksteuerventils (1) Luft mit einem vorgegebenen Druck zugeführt, der niedriger als der Reifendruck ist. Durch Beaufschlagung des Steuerelementes (10) wird das Ventil (5, 6) des Reifendrucksteuerventils (1) in die Offenstellung bewegt.

Vom Reifen her kann nun die Luft über den zweiten Anschluß (4), das Ventil (5, 6), den ersten Anschluß (3) des Reifendrucksteuerventils (1) zum zweiten Anschluß (15) und in die Kammer (16) des Entlüftungsventils (2) gelangen. Durch Beaufschlagung der ringförmigen Wirkfläche (19) der Membran (17) hebt die Membran (17) von dem Ventilsitz (20) ab, so daß numehr über die vorerwähnte Verbindung Luft vom Reifen über den Auslaß (22) in die Atmosphäre abströmen kann. Während des Absenkens des Reifendruckes muß durch eine geeignete Maßnahme, z.B. durch Verwendung eines Druckbegrenzungsventils in der Zuleitung zum Rotor (28), am Anschluß (8) ein Druck gehalten werden, der mindestens so hoch sein muß, daß ein Zurücksetzen des Ventilkörpers (6) auf den Ventilsitz (5) durch die Kraft der Feder (7) verhindert wird.

Wenn der erste Anschluß (14) und der zweite Anschluß (15) des Entlüftungsventils (2) über eine Drossel (25) miteinander verbunden sind, kann während eines Reifendruckänderungsvorganges ein Überprüfen des jeweils erreichten Reifendruckes vorgenommen werden. Hierzu wird die Ventilkombination (1, 2) durch ein schaltbares Absperrventil (26) gegenüber dem Druckluftsystem des Fahrzeuges abgesperrt. Über das während eines Reifendruckänderungsvorganges geöffnete Ventil (5, 6) des Reifendrucksteuerventils (1) und die Drossel (25) des Entlüftungsventils (2) erfolgt nun ein Druckausgleich, so daß in der Leitung vom ersten Anschluß (14) des Entlüftungsventils (2) zum Absperrventil (26) der jeweils vorhandene Reifendruck ansteht. Mit Hilfe einer in der Leitung vom ersten Anschluß (14) des Entlüftungsventils (2 zum Absperrventil (26) angeordneten Meßeinrichtung (27) kann der vorerwähnte Reifendruck erkennbar gemacht werden.

Wird die Überprüfung des Reifendruckes nach einer Unterbrechung des Reifendrucksenkens vorgenommen, dann sorgt der vorerwähnte Druckausgleich über die Drossel (25) für ein Schließen des Auslaßventils (17, 20) zur Atmosphäre.

**Patentansprüche**

1. Einrichtung zur Änderung des Druckes im Reifen eines Fahrzeuges mit folgenden Merkmalen:
a) In der zum Füllen und Leeren des Reifens dienenden Druckluftleitung ist ein Reifendrucksteuerventil (1) angeordnet, dessen zweiten Anschluß (4) mit dem Reifenanschluß verbunden ist;
b) der erste Anschluß (3) des Reifendrucksteuerventils (1) ist mit einem zweiten Anschluß (15) eines Entlüftungsventils (2) verbunden;
c) das Reifendrucksteuerventil (1) weist eine Ventileinrichtung (6) auf, über die seine beiden Anschlüsse (3,4) miteinander verbindbar sind;
d) das Entlüftungsventil (2) ist druckabhängig einstellbar und so ausgebildet, daß der zweite Anschluß (15) des Entlüftungsventils (2) in einer ersten Stellung des Entlüftungsventils (2) mit einem ersten, mit der Druckmittelquelle verbundenen Anschluß (14) und in einer zweiten Stellung mit einem dritten, mit der Atmosphäre verbundenen Anschluß (22) verbindbar ist;

e) das Entlüftungsventil (2) ist so ausgebildet, daß es einerseits vom Druck im ersten Anschluß (14) in Richtung auf die erste Stellung zu beaufschlagbar und andererseits vom Druck im dritten Anschluß (22) in Richtung auf die zweite Stellung beaufschlagbar ist;

f) die Höhe des Ausgangsdruckes der Druckmittelquelle ist einstellbar, gekennzeichnet durch folgendes Merkmal:

g) Das Reifendrucksteuerventil (1) weist einen dritten Anschluß (8) auf, über den ein Betätigungskolben (10) zur Betätigung und zur Offenhaltung der Ventileinrichtung (5, 6) gegen eine Rückstellkraft mit dem Druck der Druckmittelquelle beaufschlagbar ist.

2. Einrichtung nach Anspruch 1, dadurch gekennzeichnet, daß der dritte Anschluß (8) des Reifendrucksteuerventils (1) mit dem ersten Anschluß (14) des Entlüftungsventils (2) verbunden ist.

3. Einrichtung nach Anspruch 1, dadurch gekennzeichnet, daß das Steuerelement (10) als bewegliche Wand (10) der Steuerkammer (9) des Reifendrucksteuerventils (1) ausgebildet ist.

4. Einrichtung nach Anspruch 1, dadurch gekennzeichnet, daß das Steuerelement (10) bezüglich des Ventils (5, 6) längsbeweglich angeordnet ist und einen als Ventilstößel (11) ausgebildeten Fortsatz (11) aufweist, mit dem der Schließkörper (6) des Ventils (5, 6) in die Offenstellung bewegbar ist;

5. Einrichtung nach Anspruch 1, dadurch gekennzeichnet, daß die dem dritten Anschluß (8) des Reifendrucksteuerventils (1) abgewandte Seite (12) des Steuerelementes (10) gegenüber dem ersten Anschluß (3) und dem zweiten Anschluß (4) des Reifendrucksteuerventils (1) abgedichtet ist.

6. Einrichtung nach Anspruch 1, dadurch gekennzeichnet, daß das Reifendrucksteuerventil (1) und das Entlüftungsventil (2) baulich zu einer Ventileinheit (1, 2) in einem gemeinsamen Gehäuse vereinigt sind.

**Claims**

1. A device for changing the pressure in the tyre of a vehicle, having the following features:

a) in the compressed-air line serving to fill and empty the tyre there is arranged a tyre pressure control valve (1), the second connection (4) of which is connected to the tyre connection;

b) the first connection (3) of the tyre pressure control valve (1) is connected to a second connection (15) of a vent valve (2);

c) the tyre pressure control valve (1) comprises a valve device (6), by way of which its two connections (3, 4) can be connected to one another;

d) the vent valve (2) is adjustable dependent on pressure and is constructed so that the second connection (15) of the vent valve (2) can be connected in a first position of the vent valve (2) to a first connection (14) connected to the source of pressure medium, and in a second position can be connected to a third connection (22) connected to the atmosphere;

e) the vent valve (2) is constructed so that on the one side it can be pressurized by the pressure in the first connection (14) towards the first position and on the other side it can be pressurized by the pressure in the third connection (22) towards the second position;

f) the level of the starting pressure of the pressure medium source is adjustable; characterized by the following feature:

g) the tyre pressure control valve (1) has a third connection (8) by way of which an actuating piston (10) for actuating and holding open the valve device (5, 6) can be pressurized against a restoring force with the pressure of the pressure medium source.

2. A device according to claim 1, characterized in that the third connection (8) of the tyre pressure control valve (1) is connected to the first connection (14) of the vent valve (2).

3. A device according to claim 1, characterized in that the control element (10) is in the form of a movable wall (10) of the control chamber (9) of the tyre pressure control valve (1).

4. A device according to claim 1, characterized in that the control element (10) is arranged so that it is longitudinally movable relative to the valve (5, 6) and has an extension (11) in the form of a valve plunger (11), with which the closing member (6) of the valve (5, 6) is movable into the open position.

5. A device according to claim 1, characterized in that the side (12) of the control element (10) remote from the third connection (8) of the tyre pressure control valve (1) is sealed with respect to the first connection (3) and the second connection (4) of the tyre pressure control valve (1).

6. A device according to claim 1, characterized in that the tyre pressure control valve (1) and the vent valve (2) are combined structurally to form a valve unit (1, 2) in a common housing.

**Revendications**

1. Dispositif de modification de la pression dans un pneumatique d'un véhicule, avec les caractéristiques suivantes :

a) sur la conduite d'air comprimé servant au gonflage et au dégonflage du pneumatique est agencée une soupape de commande de pression de pneumatique (1) dont le deuxième raccord (4) est relié au raccord du pneumatique;

b) le premier raccord (3) de la soupape de commande de pression de pneumatique (1) est relié à un deuxième raccord (15) d'une soupape de sortie d'air (2);

c) la soupape de commande de pression de pneumatique (1) présente un dispositif-soupape (6) par lequel ses deux raccords (3, 4) peuvent être reliés l'un à l'autre;

d) la soupape de sortie d'air (2) peut être positionnée en fonction de la pression et est conçue-réalisée de manière que le deuxième raccord (15) de la soupape de sortie d'air (2) puisse être relié, dans une première position de la soupape de sortie d'air (2), à un premier raccord (14) relié à la source de fluide de pression, et, dans une deuxième position, à un troisième raccord (22) relié à l'atmosphère;

e) la soupape de sortie d'air (2) est conçue-réalisée de manière à pouvoir être sollicitée d'une part par la pression dans le premier raccord (14), en direction de la première position, et, d'autre part, par la pression dans le troisième raccord (22), en direction de la deuxième position;

f) le niveau de la pression de sortie de la source de fluide de pression est réglable, caractérisé par la caractéristique suivante :

g) la soupape de commande de pression de pneumatique (1) présente un troisième raccord (8) par l'intermédiaire duquel un piston d'actionnement (10) pour actionner le dispositif-soupape (5, 6) et le maintenir en condition ouverte peut être sollicité, contre une force de rappel, par la pression de la source de fluide de pression. .

2. Dispositif selon revendication 1, caractérisé par le fait que le troisième raccord (8) de la soupape de commande de pression de pneumatique (1) est relié au premier raccord (14) de la soupape de sortie d'air (2).

3. Dispositif selon revendication 1, caractérisé par le fait que l'élément de commande (10) est conçu-réalisé en tant que paroi mobile (10) de la chambre de commande (9) de la soupape de commande de pression de pneumatique (1).

4. Dispositif selon revendication 1, caractérisé par le fait que l'élément de commande (10) est agencé avec possibilité de déplacement longitudinal par rapport à la soupape (5, 6) et présente un saillant (11) réalisé en tant que poussoir de soupape (11), avec lequel l'organe obturateur (6) de la soupape (5, 6) peut être déplacé à la position ouverte.

5. Dispositif selon revendication 1, caractérisé par le fait que le côté (12) de l'élément de commande (10) non en regard du troisième raccord (8) de la soupape de commande de pression de pneumatique (1) est séparé, par des moyens d'étanchéité, du premier raccord (3) et du deuxième raccord (4) de la soupape de commande de pression de pneumatique (1).

6. Dispositif selon revendication 1, caractérisé par le fait que la soupape de commande de pression de pneumatique (1) et la soupape de sortie d'air (2) sont rassemblées, par construction, en une unité-soupape (1, 2) dans un corps commun.